(19) **Europäisches Patentamt**
**European Patent Office**
**Office européen des brevets**

(11) **EP 1 870 997 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(51) Int Cl.:
***H02M 7/48*** *(2007.01)*

(21) Anmeldenummer: **06405268.1**

(22) Anmeldetag: **23.06.2006**

(54) **Verfahren zum Betrieb einer Umrichterschaltung**

Method of operating a converter circuit

Procédé de fonctionnement d'un circuit convertisseur

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**26.12.2007 Patentblatt 2007/52**

(73) Patentinhaber: **ABB Schweiz AG**
**5400 Baden (CH)**

(72) Erfinder:
• **Conticelli, Fabio**
**5405 Dättwil (CH)**

• **Bohren, Patrick**
**5600 Lenzburg (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**US-A- 6 052 297    US-B1- 6 201 715**

## Beschreibung

### Technisches Gebiet

Die Erfindung bezieht sich auf das Gebiet der Leistungselektronik. Sie geht aus von einem Verfahren zum Betrieb einer Umrichterschaltung gemäss dem Oberbegriff des unabhängigen Anspruchs.

### Stand der Technik

Herkömmliche Umrichterschaltungen umfassen eine Umrichtereinheit mit einer Vielzahl an ansteuerbaren Leistungshalbleiterschaltern, welche in bekannter Weise zur Schaltung von mindestens zwei Schaltspannungsniveaus verschaltet sind. Wechselspannungsseitig ist die Umrichtereinheit mit einem elektrischen Wechselspannungsnetz verbunden. Ferner ist ein kapazitiver Energiespeicher mit der Umrichtereinheit verbunden, welcher gängigerweise durch einen oder mehrere Kondensatoren gebildet ist. Für den Betrieb der Umrichterschaltung ist eine Ansteuervorrichtung vorgesehen, welche verfahrensmässig beim Betrieb der Umrichterschaltung die ansteuerbaren Leistungshalbleiterschalter mittels eines Ansteuersignals angesteuert. Das Ansteuersignal wird typischerweise aus Referenzspannungen gebildet, wobei zur Bildung des Ansteuersignals eine Zuordnungseinheit vorgesehen ist, welche den Referenzspannungen entsprechende Ansteuersignalwerte zugeordnet. Die entsprechende Referenzspannung ist die Spannung, die am zugehörigen Phasenausgang der Umrichtereinheit von der Umrichtereinheit eingestellt wird und entspricht typischerweise der zugehörigen Phasenspannung, so dass die Umrichtereinheit an ihren Phasenausgängen Spannungen entsprechend den Phasenspannungen des elektrischen Wechselspannungsnetzes einstellt. Dabei ist es unerheblich, ob symmetrische oder unsymmetrische Phasenspannungen vorliegen. Unsymmetrische Phasenspannungen liegen beispielsweise bei unterschiedlichen Phasenwinkeln der Phasenspannungen zueinander und/oder bei unterschiedlichen Amplituden der Phasenspannungen zueinander und/oder bei unterschiedlichen Frequenzen der Phasenspannungen zueinander vor. Jede Referenzspannung wird gemäss dem Stand der Technik aus einem ihr zugeordneten konstanten Modulationsindex und einem ihr zugeordneten konstanten Modulationswinkel gebildet. Somit sind beispielsweise bei einem dreiphasigen elektrischen Wechselspannungsnetz mit drei Phasenspannungen auch drei Referenzspannungen notwendig und damit auch drei unabhängige konstante Modulationsindexe sowie drei unabhängige konstante Modulationswinkel, wobei diese konstanten Modulationsindexe und diese konstanten Modulationswinkel typischerweise durch Berechnung gebildet werden, wodurch ein enormer Rechenaufwand entsteht. Demzufolge ist der Betrieb der Umrichterschaltung sehr aufwendig, uneffizient, teuer und fehleranfällig, wodurch die Verfügbarkeit der Umrichterschaltung massiv sinkt und sich die Wartung der Umrichterschaltung signifikant erhöht.

In der US 6,052,297 ist ein gattungsgemässes Verfahren zum Betrieb einer Umrichterschaltung nach dem Stand der Technik angegeben.

### Darstellung der Erfindung

Aufgabe der Erfindung ist es deshalb, ein Verfahren zum Betrieb einer Umrichterschaltung anzugeben, mittels welchem die Umrichterschaltung sehr einfach und effizient betrieben werden kann.

Die Erfindung besieht sich auf ein Verfahren gemäss Anspruch 1.

Beim erfindungsgemässen Verfahren zum Betrieb einer Umrichterschaltung weist die Umrichterschaltung eine Umrichtereinheit mit einer Vielzahl an ansteuerbaren Leistungshalbleiterschaltern auf, wobei die Umrichtereinheit wechselspannungsseitig mit einem elektrischen Wechselspannungsnetz verbunden ist und die ansteuerbaren Leistungshalbleiterschalter mittels eines aus Referenzspannungen gebildeten Ansteuersignals angesteuert werden. Erfindungsgemäss werden die Referenzspannungen aus einem periodischen Modulationsindex und aus einem periodischen Modulationswinkel gebildet, wobei der periodischen Modulationsindex und der periodischen Modulationswinkel jeweils aus der d-Komponente der Park-Clarke-Transformation der positive Sequenz der Phasenspannungen, aus der q-Komponente der Park-Clarke-Transformation der positive Sequenz der Phasenspannungen, aus d-Komponente der Park-Clarke-Transformation der negativen Sequenz der Phasenspannungen und aus der q-Komponente der Park-Clarke-Transformation der negativen Sequenz der Phasenspannungen gebildet wird. Dadurch, dass die Referenzspannungen lediglich aus einem, insbesondere aus einem einzigen, periodische Modulationsindex sowie aus einem, insbesondere aus einem einzigen, periodischen Modulationswinkel gebildet werden, welcher periodische Modulationsindex und periodische Modulationswinkel jeweils aus der d-Komponente der Park-Clarke-Transformation der positive Sequenz der Phasenspannungen, aus der q-Komponente der Park-Clarke-Transformation der positive Sequenz der Phasenspannungen, aus d-Komponente der Park-Clarke-Transformation der negativen Sequenz der Phasenspannungen und aus der q-Komponente der Park-Clarke-Transformation der negativen Sequenz der Phasenspannungen gebildet wird, ist mit Vorteil nur ein sehr geringer Rechenaufwand zur Bildung der Referenzspannungen notwendig. Die Umrichterschaltung lässt sich mit dem erfindungsgemässen Verfahren somit besonders einfach und effizient betreiben, wobei zudem eine geringe Fehleranfälligkeit und damit eine hohe Verfügbarkeit der Umrichterschaltung einhergehend mit einem geringen Wartungsaufwand erreicht werden kann.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigt:

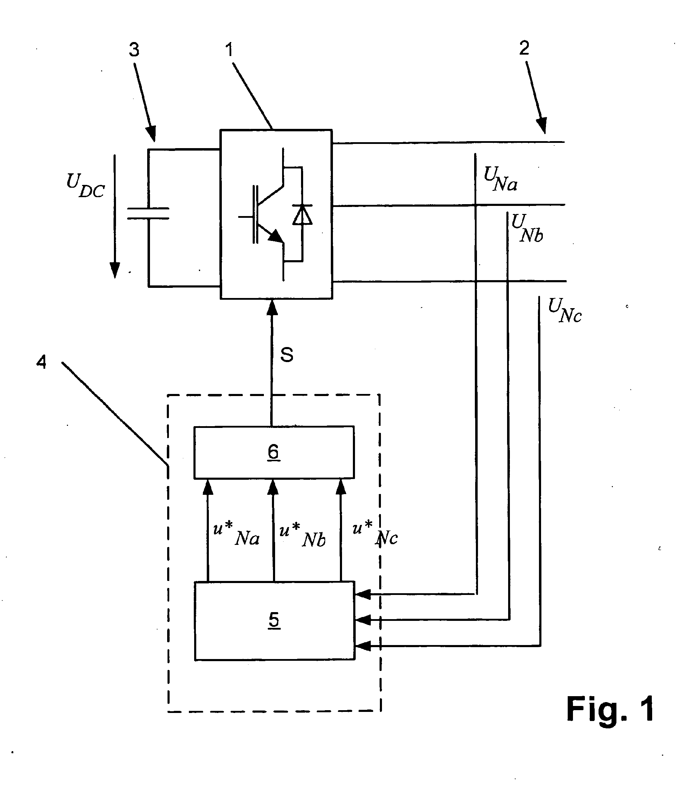

Fig. 1    eine Ausführungsform einer Umrichterschaltung, welche mit dem erfindungsgemässen Verfahren betrieben wird.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebene Ausführungsform ist als Beispiel zu verstehen hat keine beschränkende Wirkung.

**Wege zur Ausführung der Erfindung**

Eine gängige Ausführungsform einer Umrichterschaltung ist in Fig. 1 gezeigt. Die Umrichterschaltung umfasst eine Umrichtereinheit 1 zur Schaltung von mindestens zwei Schaltspannungsniveaus. Wechselspannungsseitig ist die Umrichtereinheit 1 mit einem elektrischen Wechselspannungsnetz 2 verbunden. Desweiteren ist ein kapazitiver Energiespeicher 3 mit der Umrichtereinheit 1 verbunden, welcher typischerweise durch einen oder mehrere Kondensatoren gebildet ist. Für den Betrieb der Umrichterschaltung ist eine Ansteuervorrichtung 4 vorgesehen, welche verfahrensmässig beim Betrieb der Umrichterschaltung die ansteuerbaren Leistungshalbleiterschalter mittels eines Ansteuersignals S angesteuert. Das Ansteuersignal S wird typischerweise aus Referenzspannungen $u^*_{Na}$, $u^*_{Nb}$, $u^*_{Nc}$ gebildet, wobei zur Bildung des Ansteuersignals S eine Zuordnungseinheit 6 vorgesehen ist, welche den Referenzspannungen $u^*_{Na}$, $u^*_{Nb}$, $U^*_{Nc}$ entsprechende Ansteuersignalwerte zugeordnet.

Bezüglich des erfindungsgemässen Verfahrens zum Betrieb einer solchen Umrichterschaltung werden die Referenzspannungen $u^*_{Na}$, $u^*_{Nb}$, $u^*_{Nc}$ aus einem periodischen Modulationsindex m(t) und aus einem periodischen Modulationswinkel θ(t) gebildet. Demnach ist sowohl der periodische Modulationsindex m(t) als auch der periodische Modulationswinkel θ(t) eine Funktion der Zeit t und damit insbesondere zeitabhängig. Der periodische Modulationsindex m(t) und der periodische Modulationswinkel θ(t) wird jeweils aus der d-Komponente der Park-Clarke-Transformation der positive Sequenz der Phasenspannungen $U_{Ndp}$, aus der q-Komponente der Park-Clarke-Transformation der positive Sequenz der Phasenspannungen $U_{Nqp}$, aus d-Komponente der Park-Clarke-Transformation der negativen Sequenz der Phasenspannungen $U_{Ndn}$ und aus der q-Komponente der Park-Clarke-Transformation der negativen Sequenz der Phasenspannungen $U_{Nqn}$ gebildet. Dadurch, dass die Referenzspannungen $u^*_{Na}$, $u^*_{Nb}$, $u^*_{Nc}$ lediglich aus einem, insbesondere aus einem einzigen, periodische Modulationsindex m(t) sowie aus einem, insbesondere aus einem einzigen, periodischen Modulationswinkel θ(t) gebildet werden und der periodische Modulationsindex m(t) und auch der periodischen Modulationswinkel θ(t) jeweils aus der d-Komponente der Park-Clarke-Transformation der positive Sequenz der Phasenspannungen $U_{Ndp}$, aus der q-Komponente der Park-Clarke-Transformation der positive Sequenz der Phasenspannungen $U_{Nqp}$, aus d-Komponente der Park-Clarke-Transformation der negativen Sequenz der Phasenspannungen $U_{Ndn}$ und aus der q-Komponente der Park-Clarke-Transformation der negativen Sequenz der Phasenspannungen $U_{Nqn}$ gebildet wird, ist vorteilhaft nur ein sehr geringer Rechenaufwand zur Bildung der Referenzspannungen $u^*_{Na}$, $u^*_{Nb}$, $U^*_{Nc}$ notwendig. Die Umrichterschaltung lässt sich mit dem erfindungsgemässen Verfahren demzufolge sehr einfach und effizient betreiben, wobei ferner eine geringe Fehleranfälligkeit und damit eine hohe Verfügbarkeit der Umrichterschaltung einhergehend mit einem geringen Wartungsaufwand erreicht werden kann. Gegenüber dem Stand der Technik müssen beispielsweise bei einem dreiphasigen elektrischen Wechselspannungsnetz nicht mehr drei unabhängige konstante Modulationsindexe sowie drei unabhängige konstante Modulationswinkel gebildet werden sonder lediglich nur noch ein periodischer Modulationsindex m(t) und ein periodischer Modulationswinkel θ(t).

Der periodische Modulationsindex m(t) und der periodische Modulationswinkel θ(t) werden insbesondere in der Ansteuervorrichtung 4 wie folgt, insbesondere durch Berechnung, gebildet

$$m(t) = \frac{\sqrt{(U_{Ndp} + \cos(2\omega t) \cdot U_{Ndn} + \sin(2\omega t) \cdot U_{Nqn})^2 + (U_{Nqp} + \cos(2\omega t) \cdot U_{Nqn} - \sin(2\omega t) \cdot U_{Ndn})^2}}{U_{DC}/2}$$

$$\theta(t) = \arctan(\frac{U_{Nqp} + \cos(2\omega t) \cdot U_{Nqn} - \sin(2\omega t) \cdot U_{Ndn}}{U_{Ndp} + \cos(2\omega t) \cdot U_{Ndn} + \sin(2\omega t) \cdot U_{Nqn}})$$

wobei $U_{DC}$ die Spannung am kapazitiven Energiespeicher 3 ist und wobei $\omega = 2\Pi F_{nom}$ ist und $F_{nom}$ die Nominalfrequenz des elektrischen Wechselspannungsnetzes 2 ist, beispielsweise $F_{nom}$=50 Hz bei einem gängigen elektrischen Verbund-wechselspannungsnetz oder $F_{nom}$=16 2/3Hz bei einem elektrischen Bahnwechselspannungsnetz. Zur Ermittlung des Phasenwinkels $\omega t$ umfasst die Ansteuervorrichtung 4 vorzugsweise einen Phasenregelkreis (Phase locked loop).

Vorzugsweise folgt die Umrichtereinheit 1 den Phasenspannungen $U_{Na}$, $U_{Nb}$, $U_{Nc}$, insbesondere auch wenn unsymmetrische Phasenspannungen $U_{Na}$, $U_{Nb}$, $U_{Nc}$ vorliegen, d.h. die Referenzspannungen $u^*_{Na}$, $u^*_{Nb}$, $u^*_{Nc}$ entsprechen den Phasenspannungen $U_{Na}$, $U_{Nb}$, $U_{Nc}$. Im Park-Clarke-Bezugssystem (dq-Bezugssystem) ergibt sich die d-Komponente der Park-Clarke-Transformation der Referenzspannungen $u^*_d$ und die q-Komponente der Park-Clarke-Transformation der der Referenzspannungen $u^*_q$ zu

$$u^*_d = m \cdot \cos(\theta) \cdot U_{DC} / 2$$

$$u^*_q = m \cdot \sin(\theta) \cdot U_{DC} / 2$$

Mittels der inversen Park-Clarke-Transformation, d.h. durch die Rücktransformation in den Zeitbereich ergeben sich dann die Referenzspannungen $u^*_{Na}$, $u^*_{Nb}$, $u^*_{Nc}$zu

$$u^*_{Na} = (m \cdot \cos(\theta) \cdot U_{DC} / 2) \cdot \sin(\omega t) + (m \cdot \sin(\theta) \cdot U_{DC} / 2) \cdot \cos(\omega t)$$

$$u^*_{Nb} = \sqrt{3} \cdot ((-m \cdot \cos(\theta) \cdot U_{DC} / 2) \cdot \cos(\omega t) + (m \cdot \sin(\theta) \cdot U_{DC} / 2) \cdot \sin(\omega t))$$
$$- ((m \cdot \cos(\theta) \cdot U_{DC} / 2) \cdot \sin(\omega t) + (m \cdot \sin(\theta) \cdot U_{DC} / 2) \cdot \cos(\omega t))$$

$$u^*_{Nc} = -\sqrt{3} \cdot ((-m \cdot \cos(\theta) \cdot U_{DC} / 2) \cdot \cos(\omega t) + (m \cdot \sin(\theta) \cdot U_{DC} / 2) \cdot \sin(\omega t))$$
$$- ((m \cdot \cos(\theta) \cdot U_{DC} / 2) \cdot \sin(\omega t) + (m \cdot \sin(\theta) \cdot U_{DC} / 2) \cdot \cos(\omega t))$$

Die Referenzspannungen $u^*_{Na}$, $u^*_{Nb}$, $u^*_{Nc}$ werden insbesondere in der Ansteuervorrichtung 4, insbesondere durch Berechnung, gebildet.
Vorzugsweise wird die d-Komponente der Park-Clarke-Transformation der positive Sequenz der Phasenspannungen $U_{Ndp}$, die q-Komponente der Park-Clarke-Transformation der positive Sequenz der Phasenspannungen $U_{Nqp}$, die d-Komponente der Park-Clarke-Transformation der negativen Sequenz der Phasenspannungen $U_{Ndn}$ und die q-Komponente der Park-Clarke-Transformation der negativen Sequenz der Phasenspannungen $U_{Nqn}$ jeweils aus der d-Komponente der Park-Clarke-Transformation der Phasenspannungen $U_{Nd}$ und aus der q-Komponente der Park-Clarke-Transformation der Phasenspannungen $U_{Nq}$ gebildet. Die Bildung erfolgt insbesondere in der Ansteuervorrichtung 4 und insbesondere durch Berechnung wie folgt

$$U_{Ndp} = U_{Nd} - \mathrm{Re}(U_{Cr})$$

$$U_{Nqp} = U_{Nq} - \mathrm{Im}(U_{Cr})$$

$$U_{Ndn} = \mathrm{Re}(U_{Cr} \cdot e^{j2\omega t})$$

$$U_{Nqn} = \text{Im}(U_{Cr} \cdot e^{j2\omega t})$$

$$U_{Cr} = \left(\frac{U_{Nd} - U_{Ndt1}}{2 \cdot \sin(\omega t1)} + j\frac{U_{Nq} - U_{Nqt1}}{2 \cdot \sin(\omega t1)}\right) \cdot e^{j(\frac{\pi}{2} - \omega t1)}$$

wobei $U_{Ndt1}$ die um die Zeitdauer t1 verzögerte d-Komponente der Park-Clarke-Transformation der Phasenspannungen $U_{Nd}$ ist und $U_{Nqt1}$ die um die Zeitdauer t1 verzögerte q-Komponente der Park-Clarke-Transformation der Phasenspannungen $U_{Nq}$ ist. Vorzugsweise wird die Zeitdauer t1 in der Grössenordnung von $t1 = \dfrac{1}{4} \cdot \dfrac{1}{F_{nom}}$ gewählt.

Der Vollständigkeit halber sei erwähnt, dass insbesondere im Falle von unsymmetrischen Phasenspannungen $U_{Na}$, $U_{Nb}$, $U_{Nc}$ diese unsymmetrischen Phasenspannungen $U_{Na}$, $U_{Nb}$, $U_{Nc}$ in eine positive Sequenz der Phasenspannungen $U_{Np}$ (positives Bezugssystem) und in eine negative Sequenz der Phasenspannungen $U_{Nn}$ (negatives Bezugssystem) zerlegt werden können, die sich dann allgemein wie folgt ergeben zu

$$U_{Np} = U_{Ndp} + jU_{Nqp}$$

$$U_{Nn} = U_{Cr} \cdot e^{j2\omega t}$$

Die Phasenspannungen $U_{Na}$, $U_{Nb}$, $U_{Nc}$ selbst sind wie folgt definiert:

$$U_{Na} = U_{Na,A} \cdot \sin(\omega t)$$

$$U_{Nb} = U_{Nb,A} \cdot \sin\left(\omega t - \frac{2\pi}{3}\right)$$

$$U_{Nc} = U_{Nc,A} \cdot \sin\left(\omega t - \frac{4\pi}{3}\right),$$

wobei die Phasenspannungen $U_{Na}$, $U_{Nb}$, $U_{Nc}$ des Wechselspannungsnetzes 2, insbesondere durch Messung, ermittelt werden und die Summe der Phasenspannungen $U_{Na}$, $U_{Nb}$, $U_{Nc}$ Null ergibt, d.h. es gilt

$$U_{Na} + U_{Nb} + U_{Nc} = 0$$

Die d-Komponente der Park-Clarke-Transformation der Phasenspannungen $U_{Nd}$ und die q-Komponente der Park-Clarke-Transformation der Phasenspannungen $U_{Nq}$ ergeben sich dann zu

$$U_{Nd} = U_{Na} \cdot \cos(\omega t) + \frac{1}{\sqrt{3}} \cdot (U_{Nb} - U_{Nc}) \cdot \sin(\omega t)$$

$$U_{Nq} = -U_{Na} \cdot \sin(\omega t) + \frac{1}{\sqrt{3}} \cdot (U_{Nb} - U_{Nc}) \cdot \cos(\omega t)$$

Die d-Komponente der Park-Clarke-Transformation der Phasenspannungen $U_{Nd}$ und die q-Komponente der Park-Clarke-Transformation der Phasenspannungen $U_{Nq}$, wird, insbesondere in der Ansteuervorrichtung 4, aus den ermittelten Phasenspannungen $U_{Na}$, $U_{Nb}$, $U_{Nc}$, insbesondere durch Berechnung, gebildet, wobei die d-Komponente der Park-Clarke-Transformation der Phasenspannungen $U_{Nd}$ und der q-Komponente der Park-Clarke-Transformation der Phasenspannungen $U_{Nq}$ dann, wie vorstehend bereits erläutert, zur Bildung der d-Komponente der Park-Clarke-Transformation der positive Sequenz der Phasenspannungen $U_{Ndp}$, der q-Komponente der Park-Clarke-Transformation der positive Sequenz der Phasenspannungen $U_{Nqp}$, der d-Komponente der Park-Clarke-Transformation der negativen Sequenz der Phasenspannungen $U_{Ndn}$ und der q-Komponente der Park-Clarke-Transformation der negativen Sequenz der Phasenspannungen $U_{Nqn}$ herangezogen werden.

Es sei an dieser Stelle angemerkt, dass die positive Sequenz der Phasenspannungen $U_{Np}$ positive Koordinaten im positiven Bezugssystemen und eine Winkelgeschwindigkeit w und die negative Sequenz der Phasenspannungen $U_{Nn}$ positive Koordinaten im negativen Bezugssystemen und eine Winkelgeschwindigkeit $-\omega$ aufweist.

Mit der positive Sequenz der Phasenspannungen $U_{Np}$ und der negativen Sequenz der Phasenspannungen $U_{Nn}$ kann die Gesamtphasenspannung

$$U_{Nd} + jU_{Nq}$$

im positive Bezugssystem mit der d-Komponente der Park-Clarke-Transformation der Phasenspannungen $U_{Nd}$ und der q-Komponente der Park-Clarke-Transformation der Phasenspannungen $U_{Nq}$ wie folgt geschrieben werden

$$U_{Nd} + jU_{Nq} = U_{Np} + e^{-2j\omega t} \cdot U_{Nn}$$

$$\Leftrightarrow$$

$$U_{Nd} + jU_{Nq} = U_{Ndp} + jU_{Nqp} + (\cos(2\omega t) - j\sin(2\omega t)) \cdot (U_{Ndn} + jU_{Nqn})$$

$$\Leftrightarrow$$

$$U_{Nd} + jU_{Nq} = U_{Ndp} + \cos(2\omega t) \cdot U_{Ndn} + \sin(2\omega t) \cdot U_{Nqn} + j(U_{Nqp} + \cos(2\omega t) \cdot U_{Nqn} - \sin(2\omega t) \cdot U_{Ndn})$$

wobei der Term

$$e^{-2j\omega t} \cdot U_{Nn}$$

die Koordinaten der negative Sequenz der Phasenspannungen $U_{Nn}$ im positiven Bezugssystem sind, welche mit einer 2-fachen Winkelgeschwindigkeit $\omega$ rotieren.

Die Bildung der Referenzspannungen $u^*_{Na}$, $u^*_{Nb}$, $u^*_{Nc}$, die Bildung des periodischen Modulationsindexes $m(t)$ und die Bildung des periodischen Modulationswinkels $\theta(t)$ erfolgt vorzugsweise fortlaufend, wodurch immer die aktuellsten Werte der Referenzspannungen $u^*_{Na}$, $u^*_{Nb}$, $u^*_{Nc}$, des periodischen Modulationsindexes $m(t)$ und des periodischen Modulationswinkels $\theta(t)$ vorliegen. Auch die Bildung der d-Komponente der Park-Clarke-Transformation der positive Sequenz der Phasenspannungen $U_{Ndp}$, die Bildung der q-Komponente der Park-Clarke-Transformation der positive Sequenz der Phasenspannungen $U_{Nqp}$, die Bildung der d-Komponente der Park-Clarke-Transformation der negativen Sequenz der Phasenspannungen $U_{Ndn}$ und die Bildung der q-Komponente der Park-Clarke-Transformation der negativen Sequenz der Phasenspannungen $U_{Nqn}$ erfolgt vorzugsweise fortlaufend. Weiterhin erfolgt die Ermittlung der Phasenspannungen $U_{Na}$, $U_{Nb}$, $U_{Nc}$ des Wechselspannungsnetzes 2 fortlaufend, so dass stets mit aktuellsten Werten gerechnet werden kann. Ferner erfolgt die Bildung der d-Komponente der Park-Clarke-Transformation der Phasenspannungen $U_{Nd}$ und die Bildung der q-Komponente der Park-Clarke-Transformation der Phasenspannungen $U_{Nq}$ vorzugsweise ebenfalls fortlaufend.

**Bezugszeichenliste**

1 Umrichtereinheit
2 elektrisches Wechselspannungsnetz
3 kapazitiver Energiespeicher

4    Ansteuervorrichtung
5    Berechnungseinheit
6    Zuordnungseinheit

**Patentansprüche**

1.  Verfahren zum Betrieb einer Umrichterschaltung, wobei die Umrichterschaltung eine Umrichtereinheit (1) mit einer Vielzahl an ansteuerbaren Leistungshalbleiterschaltem aufweist und die Umrichtereinheit (1) wechselspannungsseitig mit einem elektrischen Wechselspannungsnetz (2) verbunden ist und mit einem kapazitiven Energiespeicher (3) verbunden ist,
    bei dem die ansteuerbaren Leistungshalbleiterschalter mittels eines aus Referenzspannungen ($u^*_{Na}$, $u^*_{Nb}$, $u^*_{Nc}$) gebildeten Ansteuersignals (S) angesteuert werden,
    **dadurch gekennzeichnet,**
    **dass** die Referenzspannungen ($u^*_{Na}$, $u^*_{Nb}$, $u^*_{Nc}$) aus einem periodischen Modulationsindex (m(t)) und aus einem periodischen Modulationswinkel ($\theta(t)$) gebildet werden, und
    **dass** der periodischen Modulationsindex (m(t)) und der periodischen Modulationswinkel ($\theta(t)$) jeweils aus der d-Komponente der Park-Clarke-Transformation der positive Sequenz der Phasenspannungen ($U_{Ndp}$), aus der q-Komponente der Park-Clarke-Transformation der positive Sequenz der Phasenspannungen ($U_{Nqp}$), aus d-Komponente der Park-Clarke-Transformation der negativen Sequenz der Phasenspannungen ($U_{Ndn}$) und aus der q-Komponente der Park-Clarke-Transformation der negativen Sequenz der Phasenspannungen ($U_{Nqn}$) gemäss den Formeln

$$m(t) = \frac{\sqrt{(U_{Ndp} + \cos(2\omega t) \cdot U_{Ndn} + \sin(2\omega t) \cdot U_{Nqn})^2 + (U_{Nqp} + \cos(2\omega t) \cdot U_{Nqn} - \sin(2\omega t) \cdot U_{Ndn})^2}}{U_{DC}/2}$$

$$\theta(t) = \arctan(\frac{U_{Nqp} + \cos(2\omega t) \cdot U_{Nqn} - \sin(2\omega t) \cdot U_{Ndn}}{U_{Ndp} + \cos(2\omega t) \cdot U_{Ndn} + \sin(2\omega t) \cdot U_{Nqn}})$$

    gebildet wird, wobei $\omega$ die Kreisfrequenz in Abhängigkeit der Nominalfrequenz des elektrischen Wechseispannungsnetzes (2) und $U_{DC}$ die Spannung am kapazitiven Energiespeicher (3) ist.

2.  Verfahren nach Anspruch 1, **dadurch gekennzeichnet, dass** die d-Komponente der Park-Clarke-Transformation der positive Sequenz der Phasenspannungen ($U_{Ndp}$), die q-Komponente der Park-Clarke-Transformation der positive Sequenz der Phasenspannungen ($U_{Nqp}$), die d-Komponente der Park-Clarke-Transformation der negativen Sequenz der Phasenspannungen ($U_{Ndn}$) und die q-Komponente der Park-Clarke-Transformation der negativen Sequenz der Phasenspannungen ($U_{Nqn}$) jeweils aus der d-Komponente der Park-Clarke-Transformation der Phasenspannungen ($U_{Nd}$) und aus der q-Komponente der Park-Clarke-Transformation der Phasenspannungen ($U_{Nq}$) gebildet wirt.

3.  Verfahren nach Anspruch 2, **dadurch gekennzeichnet, dass** die Bildung der d-Komponente der Park-Clarke-Transformation der positive Sequenz der Phasenspannungen ($U_{Ndp}$), die Bildung der q-Komponente der Park-Clarke-Transformation der positive Sequenz der Phasenspannungen ($U_{Nqp}$), die Bildung der d-Komponente der Park-Clarke-Transformation der negativen Sequenz der Phasenspannungen ($U_{Ndn}$) und die Bildung der q-Komponente der Park-Clarke-Transformation der negativen Sequenz der Phasenspannungen ($U_{Nqn}$) fortlaufend erfolgt.

4.  Verfahren nach Anspruch 2 oder 3, **dadurch gekennzeichnet, dass** die Phasenspannungen ($U_{Na}$, $U_{Nb}$, $U_{Nc}$) des Wechselspannungsnetzes (2) ermittelt werden, und dass die d-Komponente der Park-Clarke-Transformation der Phasenspannungen ($U_{Nd}$) und die q-Komponente der Park-Clarke-Transformation der Phasenspannungen ($U_{Nq}$) aus den ermittelten Phasenspannungen ($U_{Na}$, $U_{Nb}$, $U_{Nc}$) gebildet wird.

5.  Verfahren nach Anspruch 4, **dadurch gekennzeichnet, dass** Ermittlung der Phasenspannungen ($U_{Na}$, $U_{Nb}$, $U_{Nc}$)

des Wechselspannungsnetzes (2) fortlaufend erfolgt, und die Bildung der d-Komponente der Park-Clarke-Transformation der Phasenspannungen ($U_{Nd}$) und die Bildung der q-Komponente der Park-Clarke-Transformation der Phasenspannungen ($U_{Nq}$) fortlaufend erfolgt.

6. Verfahren nach einem der Ansprüche 1 bis 5, **dadurch gekennzeichnet, dass** die Bildung der Referenzspannungen ($u^*_{Na}$, $u^*_{Nb}$, $u^*_{Nc}$) fortlaufend erfolgt, und dass die Bildung des periodischen Modulationsindexes (m(t)) und die Bildung des periodischen Modulationswinkels (θ(t)) fortlaufend erfolgt.

**Claims**

1. Method for operating a converter circuit, wherein the converter circuit has a converter unit (1) having a multiplicity of drivable power semiconductor switches and the converter unit (1) is connected to an electrical AC voltage supply system (2) on the AC voltage side and is connected to a capacitive energy store (3),
   in which the drivable power semiconductor switches are driven by means of a drive signal (S) formed from reference voltages ($u^*_{Na}$, $u^*_{Nb}$, $u_{*Nc}$),
   **characterized**
   **in that** the reference voltages ($u^*_{Na}$, $u^*_{Nb}$, $u^*_{Nc}$) are formed from a periodic modulation index (m(t)) and from a periodic modulation angle (θ(t)), and
   **in that** the periodic modulation index (m(t)) and the periodic modulation angle (θ(t)) are formed in each case from the d component of the Park-Clarke transformation of the positive sequence of the phase voltages ($U_{Ndp}$), from the q component of the Park-Clarke transformation of the positive sequence of the phase voltages ($U_{Nqp}$), from the d component of the Park-Clarke transformation of the negative sequence of the phase voltages ($U_{Ndn}$) and from the q component of the Park-Clarke transformation of the negative sequence of the phase voltages ($U_{Nqn}$), according to the formulae

$$m(t) = \frac{\sqrt{(U_{Ndp} + \cos(2\omega t) \cdot U_{Ndn} + \sin(2\omega t) \cdot U_{Nqn})^2 + (U_{Nqp} + \cos(2\omega t) \cdot U_{Nqn} - \sin(2\omega t) \cdot U_{Ndn})^2}}{U_{DC}/2}$$

$$\theta(t) = \arctan(\frac{U_{Nqp} + \cos(2\omega t) \cdot U_{Nqn} - \sin(2\omega t) \cdot U_{Ndn}}{U_{Ndp} + \cos(2\omega t) \cdot U_{Ndn} + \sin(2\omega t) \cdot U_{Nqn}})$$

, where ω is the angular frequency depending on the nominal frequency of the electrical AC voltage supply system (2), and $U_{DC}$ is the voltage at the capacitive energy store (3).

2. Method according to Claim 1, **characterized in that** the d component of the Park-Clarke transformation of the positive sequence of the phase voltages ($U_{Ndp}$), the q component of the Park-Clarke transformation of the positive sequence of the phase voltages ($U_{Nqp}$), the d component of the Park-Clarke transformation of the negative sequence of the phase voltages ($U_{Ndn}$) and the q component of the Park-Clarke transformation of the negative sequence of the phase voltages ($U_{Nqn}$) are formed in each case from the d component of the Park-Clarke transformation of the phase voltages ($U_{Nd}$) and from the q component of the Park-Clarke transformation of the phase voltages ($U_{Nq}$).

3. Method according to Claim 2, **characterized in that** the formation of the d component of the Park-Clarke transformation of the positive sequence of the phase voltages ($U_{dp}$), the formation of the q component of the Park-Clarke transformation of the positive sequence of the phase voltages ($U_{Nqp}$), the formation of the d component of the Park-Clarke transformation of the negative sequence of the phase voltages ($U_{Ndn}$) and the formation of the q component of the Park-Clarke transformation of the negative sequence of the phase voltages ($U_{Nqn}$) are effected continuously.

4. Method according to Claim 2 or 3, **characterized in that** the phase voltages ($U_{Na}$, $U_{Nb}$, $U_{Nc}$) of the AC voltage supply system (2) are determined, and
   **in that** the d component of the Park-Clarke transformation of the phase voltages ($U_{Nd}$) and the q component of the Park-Clarke transformation of the phase voltages ($U_{Nq}$) are formed from the phase voltages ($U_{Na}$, $U_{Nb}$, $U_{Nc}$) determined.

5. Method according to Claim 4, **characterized in that** the determination of the phase voltages ($U_{Na}$, $U_{Nb}$, $U_{Nc}$) of the AC voltage supply system (2) is effected continuously, and the formation of the d component of the Park-Clarke transformation of the phase voltages ($U_{Nd}$) and the formation of the q component of the Park-Clarke transformation of the phase voltages ($U_{Nq}$) are effected continuously.

6. Method according to any of Claims 1 to 5, **characterized in that** the formation of the reference voltages ($u^*_{Na}$, $u^*_{Nb}$, $u^*_{Nc}$) is effected continuously, and **in that** the formation of the periodic modulation index (m(t)) and the formation of the periodic modulation angle ($\theta$(t)) are effected continuously.

## Revendications

1. Procédé pour faire fonctionner un circuit convertisseur, le circuit convertisseur présentant une unité de conversion (1) munie d'une pluralité de commutateurs semiconducteurs de puissance commandables et l'unité de conversion (1) étant reliée du côté de la tension alternative avec un réseau électrique de tension alternative (2) et avec un accumulateur d'énergie capacitif (3),
selon lequel les commutateurs semiconducteurs de puissance commandables sont commandés au moyen d'un signal de commande (S) formé de tensions de référence ($u^*_{Na}$, $u^*_{Nb}$, $u^*_{Nc}$),
**caractérisé en ce que** les tensions de référence ($u^*_{Na}$, $u^*_{Nb}$, $u^*_{Nc}$) sont formées d'un indice de modulation périodique (m(t)) et d'un angle de modulation périodique ($\theta$(t)) et
que l'indice de modulation périodique (m(t)) et l'angle de modulation périodique ($\theta$(t)) sont formés respectivement à partir des composantes d de la transformée de Park-Clarke de la séquence positive des tensions de phase ($U_{Ndp}$), des composantes q de la transformée de Park-Clarke de la séquence positive des tensions de phase ($U_{Nqp}$), des composantes d de la transformée de Park-Clarke de la séquence négative des tensions de phase ($U_{Ndn}$) et des composantes q de la transformée de Park-Clarke de la séquence négative des tensions de phase ($U_{Nqn}$) selon les formules

$$m(t) = \frac{\sqrt{\left(U_{Ndp} + \cos(2\omega t) \cdot U_{Ndn} + \sin(2\omega t) \cdot U_{Nqn}\right)^2 + \left(U_{Nqp} + \cos(2\omega t) \cdot U_{Nqn} + \sin(2\omega t) \cdot U_{Ndn}\right)^2}}{\frac{U_{DC}}{2}}$$

$$\theta(t) = \arctan\left(\frac{U_{Nqp} + \cos(2\omega t) \cdot U_{Nqn} + \sin(2\omega t) \cdot U_{Ndn}}{U_{Ndp} + \cos(2\omega t) \cdot U_{Ndn} + \sin(2\omega t) \cdot U_{Nqn}}\right)$$

$\omega$ désignant la fréquence angulaire en fonction de la fréquence nominale du réseau électrique de tension alternative (2) et $U_{DC}$ la tension aux bornes de l'accumulateur d'énergie capacitif (3).

2. Procédé selon la revendication 1, **caractérisé en ce que** les composantes d de la transformée de Park-Clarke de la séquence positive des tensions de phase ($U_{Ndp}$), les composantes q de la transformée de Park-Clarke de la séquence positive des tensions de phase ($U_{Nqp}$), les composantes d de la transformée de Park-Clarke de la séquence négative des tensions de phase ($U_{Ndn}$) et les composantes q de la transformée de Park-Clarke de la séquence négative des tensions de phase ($U_{Nqn}$) sont respectivement formées à partir des composantes d de la transformée de Park-Clarke des tensions de phase ($U_{Nd}$) et des composantes q de la transformée de Park-Clarke des tensions de phase ($U_{Nq}$).

3. Procédé selon la revendication 2, **caractérisé en ce que** la formation des composantes d de la transformée de Park-Clarke de la séquence positive des tensions de phase ($U_{Ndp}$), la formation des composantes q de la transformée de Park-Clarke de la séquence positive des tensions de phase ($U_{Nqp}$), la formation des composantes d de la transformée de Park-Clarke de la séquence négative des tensions de phase ($U_{Ndn}$) et la formation des composantes q de la transformée de Park-Clarke de la séquence négative des tensions de phase ($U_{Nqn}$) s'effectuent continuellement.

4.  Procédé selon la revendication 2 ou 3, **caractérisé en ce que** les tensions de phase ($U_{Na}$, $U_{Nb}$, $U_{Nc}$,) du réseau de tension alternative (2) sont déterminées et que les composantes d de la transformée de Park-Clarke des tensions de phase ($U_{Nd}$) et les composantes q de la transformée de Park-Clarke des tensions de phase ($U_{Nq}$) sont formées à partir des tensions de phase ($U_{Na}$, $U_{Nb}$, $U_{Nc}$) déterminées.

5.  Procédé selon la revendication 4, **caractérisé en ce que** la détermination des tensions de phase ($U_{Na}$, $U_{Nb}$, $U_{Nc}$) du réseau de tension alternative (2) s'effectue continuellement et la formation des composantes d de la transformée de Park-Clarke des tensions de phase ($U_{Nd}$) ainsi que la formation des composantes q de la transformée de Park-Clarke des tensions de phase ($U_{Nq}$) s'effectuent continuellement.

6.  Procédé selon l'une des revendications 1 à 5, **caractérisé en ce que** la formation des tensions de référence ($u^{*}_{Na}$, $u^{*}_{Nb}$, $u^{*}_{Nc}$) s'effectue continuellement et que la formation de l'indice de modulation périodique (m(t)) et la formation de l'angle de modulation périodique ($\theta$(t)) s'effectuent continuellement.

$$U_{DC}$$

$$U_{Na}$$

$$U_{Nb}$$

$$U_{Nc}$$

S

$$u^*{}_{Na} \quad u^*{}_{Nb} \quad u^*{}_{Nc}$$

<u>6</u>

<u>5</u>

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6052297 A